# EUROPEAN PATENT APPLICATION

(11) **EP 2 445 257 A1**
(43) Date of publication of application: **25.04.2012**
(21) Application number: 11181733.4
(22) Date of filing: 19.09.2011
(51) Int. Cl.: H04W 36/00

(54) **Delayed and conditional transport switch**

(30) Priority: 20.10.2010 US 908037
(71) Applicant: Nokia Corporation, 02150 Espoo (FI)
(72) Inventor: Bacioccola, Andrea, 00150 Helsinki (FI); Suumäki, Jan Erik, 37500 Lempäälä (FI); Laine, Tuomas, 01370 Vantaa (FI)

(57) **Abstract**

Example method, apparatus, and computer program product embodiments are disclosed to enable out-of-band short-range communication carrier transport switching for connection setup in device-to-device communication. Example embodiments of the invention include a method comprising the steps of initiating, by a first device, an out-of-band short-range carrier transport switch with a second device by transmitting wireless communication signals for providing the out-of-band carrier communication connection, and sending, by the first device, in-band short-range carrier communication connection parameters including one or more parameters indicating a timer value of an interval related to an expected completion time of a transport switch procedure, to the second device via the out-of-band short-range carrier communication connection.

## Description

### FIELD:

The field of the invention relates to wireless communication, and more particularly to out-of-band short-range communication carrier transport switching for connection setup in device-to-device communication.

### BACKGROUND:

Modern society has adopted, and is becoming reliant upon, wireless communication devices for various purposes, such as connecting users of the wireless communication devices with other users. Wireless communication devices can vary from battery powered handheld devices to stationary household and/or commercial devices utilizing an electrical network as a power source. Due to rapid development of the wireless communication devices, a number of areas capable of enabling entirely new types of communication applications have emerged.

Cellular networks facilitate communication over large geographic areas. These network technologies have commonly been divided by generations, starting in the late 1970s to early 1980s with first generation (1G) analog cellular telephones that provided baseline voice communications, to modern digital cellular telephones. GSM is an example of a widely employed 2G digital cellular network communicating in the 900 MHZ/1.8 GHZ bands in Europe and at 850 MHz and 1.9 GHZ in the United States. While long-range communication networks, like GSM, are a well-accepted means for transmitting and receiving data, due to cost, traffic and legislative concerns, these networks may not be appropriate for all data applications.

Short-range communication technologies provide communication solutions that avoid some of the problems seen in large cellular networks. Bluetooth™ is an example of a short-range wireless technology quickly gaining acceptance in the marketplace. In addition to Bluetooth™ other popular short-range communication technologies include Bluetooth™ Low Energy, IEEE 802.11 wireless local area network (WLAN), Wireless USB (WUSB), Ultra Wide-band (UWB), ZigBee (IEEE 802.15.4, IEEE 802.15.4a), and ultra high frequency radio frequency identification (UHF RFID) technologies. All of these wireless communication technologies have features and advantages that make them appropriate for various applications.

Near field communication technologies, such s radio frequency identification (RFID) technologies, comprise a range of RF transmission systems, for example standardized and proprietary systems for a large number of different purposes, such as product tagging for inventory handling and logistics, theft prevention purposes at the point of sale, and product recycling at the end of the life-cycle of the tagged product. In addition to RFID technologies, Near Field Communication (NFC) technology has recently evolved from a combination of existing contactless identification and interconnection technologies. NFC is both a "read" and "write" technology. Communication between two NFC-compatible devices occurs when they are brought within close proximity of each other: A simple wave or touch can establish an NFC connection, which is then compatible with other known wireless technologies, such as Bluetooth™ or wireless local area network (WLAN).

### SUMMARY:

Method, apparatus, and computer program product embodiments are disclosed to enable out-of-band short-range communication carrier transport switching for connection setup in device-to-device communication.

An example embodiment of the invention includes a method comprising the steps of:
initiating, by a first device, a short-range carrier transport switch procedure with a second device by transmitting wireless out-of-band short-range carrier communication signals for providing an out-of-band short-range carrier communication connection; and
sending, by the first device, in-band short-range carrier communication connection parameters including one or more parameters indicating a timer value of an interval related to an expected completion time of the transport switch procedure, to the second device via the out-of-band short-range carrier communication connection, to enable the short-range carrier transport switch procedure to switch from the out-of-band short range carrier to the in-band short range carrier for communication between the devices.

An example embodiment of the invention includes the expected completion time of the transport switch procedure being a maximum time the second device may keep its radio on to enable accepting incoming connection requests.

An example embodiment of the invention includes the expected completion time of the transport switch procedure being a minimum time, after which the connection may be initiated by an initiator device.

An example embodiment of the invention includes the further step comprising:
receiving, by the first device from the second device, a response including one or more alternate parameters indicating an alternate timer value of the interval related to an expected completion time of a transport switch procedure, via the out-of-band short-range carrier communication connection.

An example embodiment of the invention includes the out-of-band short-range carrier connection is based on an NFC Forum logical link control protocol and the first and second devices use an NFC Forum connection handover protocol as the out-of-band short-range carrier transport switch procedure to exchange the in-band short-range carrier communication connection parameters.

An example embodiment of the invention includes the further steps comprising:
sending, by the first device, an indication that a third device will perform a connection setup with the second device, to the second device via the out-of-band short-range carrier communication connection;
receiving, by the first device, connectivity settings from the second device via the out-of-band short-range carrier communication connection;
initiating, by the first device, a short-range carrier transport switch procedure with a third device by transmitting wireless communication signals providing a second out-of-band short-range carrier communication connection; and
sending, by the first device, in-band short-range carrier communication connection parameters including one or more parameters indicating a timer value of an interval related to the expected completion time of the transport switch procedure, and the connectivity settings of the second device, to the third device via the second out-of-band short-range carrier communication connection, to enable the third device to setup an in-band short-range carrier communication connection with the second device according to the in-band short-range carrier communication connection parameters, after the expected completion time.

An example embodiment of the invention includes the further steps comprising:
generating, by the first device, additional security parameters on behalf of the third device;
sending, by the first device, the additional security parameters, to the second device via the out-of-band short-range carrier communication connection; and
sending, by the first device, the additional security parameters, to the third device via the second out-of-band short-range carrier communication connection, to enable the third device to authenticate itself to the second device in setting up the in-band short-range carrier communication connection with the second device.

An example embodiment of the invention includes the further steps comprising: wherein an indication that a connection handover is to be conditional is included in a carrier power state field of an alternative carrier record in either an NFC handover request message or an NFC handover select message.

In an example embodiment of the invention, a computer program product comprising computer executable program code recorded on a computer readable storage medium, the computer executable program code, when executed by a computer processor, performing the steps in the example methods recited above.

In an example embodiment of the invention, an apparatus comprises:
at least one processor;
at least one memory including computer program code;
the at least one memory and the computer program code configured to, with the at least one processor, cause the apparatus at least to:
   initiate a short-range carrier transport switch procedure with a second device by transmitting wireless out-of-band short-range carrier communication signals for providing an out-of-band short-range carrier communication connection; and
   send in-band short-range carrier communication connection parameters including one or more parameters indicating a timer value of an interval related to an expected completion time of the transport switch procedure, to the second device via the out-of-band short-range carrier communication connection, to enable the short-range carrier transport switch procedure to switch from the out-of-band short range carrier to the in-band short range carrier for communication between the devices.

An example embodiment of the apparatus includes the expected completion time of the transport switch procedure being a maximum time the second device may keep its radio on to enable accepting incoming connection requests.

An example embodiment of the apparatus includes the expected completion time of the transport switch procedure being a minimum time, after which the connection may be initiated by an initiator device.

In an example embodiment, the apparatus further comprises:
the at least one memory and the computer program code configured to, with the at least one processor, cause the apparatus at least to:
   receive from the second device, a response including one or more alternate parameters indicating an alternate timer value of the interval related to an expected completion time of a transport switch procedure, via the out-of-band short-range carrier communication connection.

An example embodiment of the apparatus includes the out-of-band short-range carrier connection is based on an NFC Forum logical link control protocol and the apparatus and second devices use an NFC Forum connection handover protocol as the out-of-band short-range carrier transport switch procedure to exchange the in-band short-range carrier communication connection parameters.

In an example embodiment, the apparatus further comprises:
the at least one memory and the computer program code configured to, with the at least one processor, cause the apparatus at least to:
   send an indication that a third device will perform a connection setup with the second device, to the second device via the out-of-band short-range carrier communication connection;
   receive connectivity settings from the second device via the out-of-band short-range carrier communication connection;
   initiate a short-range carrier transport switch procedure with a third device by transmitting wireless communication signals providing a second out-of-band short-range carrier communication connection; and
   send in-band short-range carrier communication connection parameters including one or more parameters indicating the timer value of the interval related to an expected completion time of a transport switch procedure, and the connectivity settings of the second device, to the third device via the second out-of-band short-range carrier communication connection, to enable the third device to setup an in-band short-range carrier communication connection with the second device according to the in-band short-range carrier communication connection parameters, after the expected completion time.

The resulting embodiments enable out-of-band short-range communication carrier transport switching for connection setup in device-to-device communication.

### DESCRIPTION OF THE FIGURES:

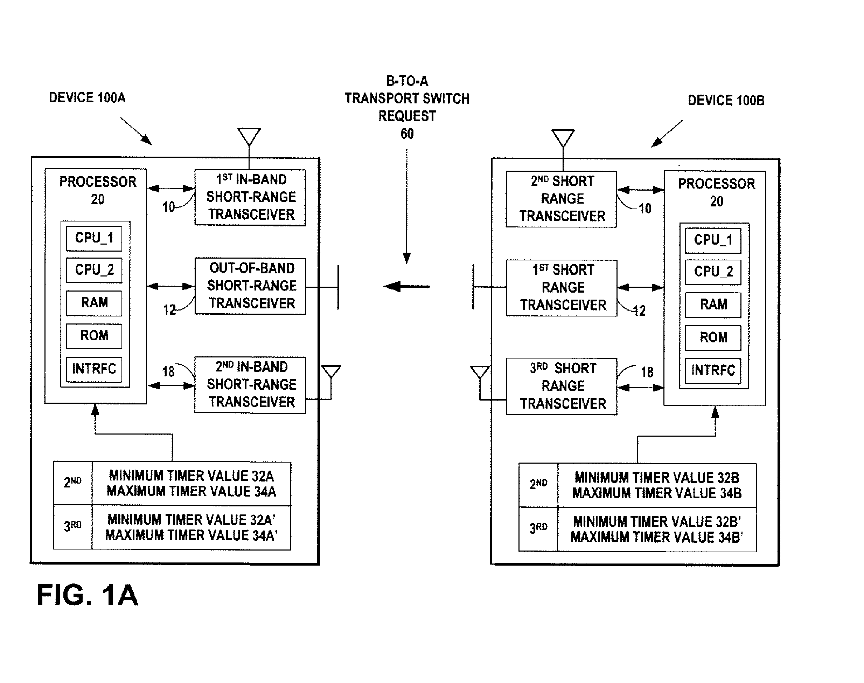

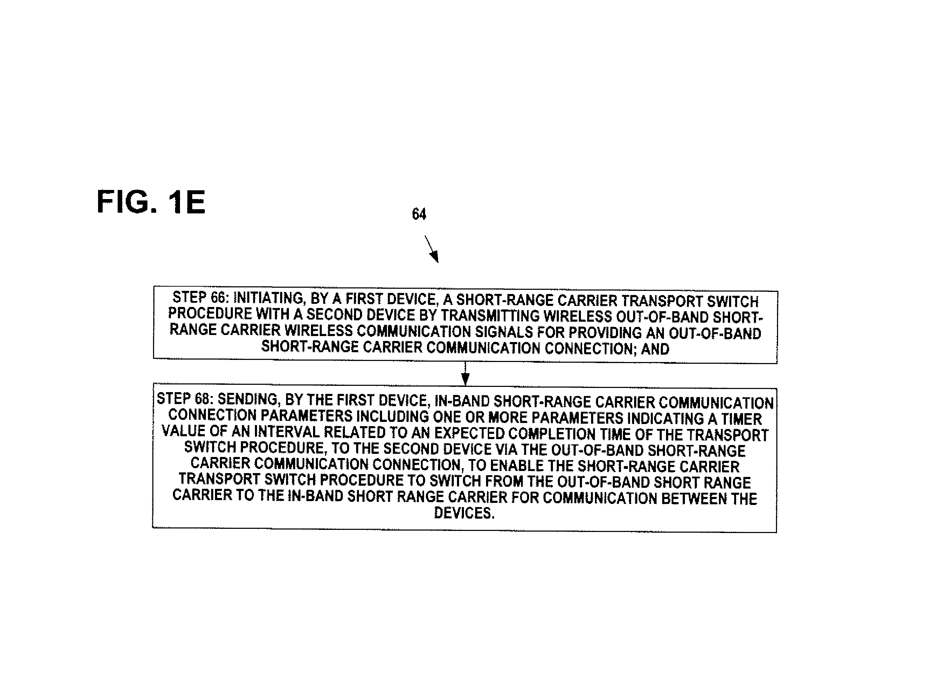

Figure 1A is an example embodiment of a wireless network diagram of wireless device A and wireless device B, with device B initiating an out-of-band short-range carrier transport switch with device A by transmitting wireless communication signals for providing the out-of-band carrier communication connection and device B sending in-band short-range carrier communication connection parameters including one or more parameters indicating a timer value of an interval related to an expected completion time of a transport switch procedure, to device A via the out-of-band short-range carrier communication connection, according to an embodiment of the present invention.

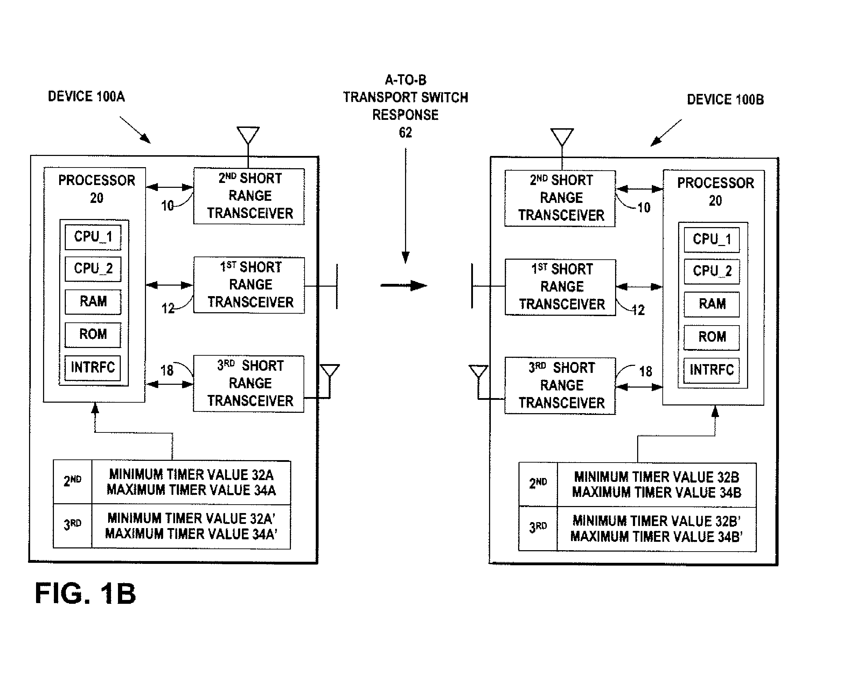

Figure 1B is an example embodiment of a wireless network diagram of wireless device A and wireless device B of Figure 1A, with device B receiving from device A, a response including one or more alternate parameters indicating an alternate timer value of the interval related to the expected completion time of the transport switch procedure, via the out-of-band short-range carrier communication connection, according to an embodiment of the present invention.

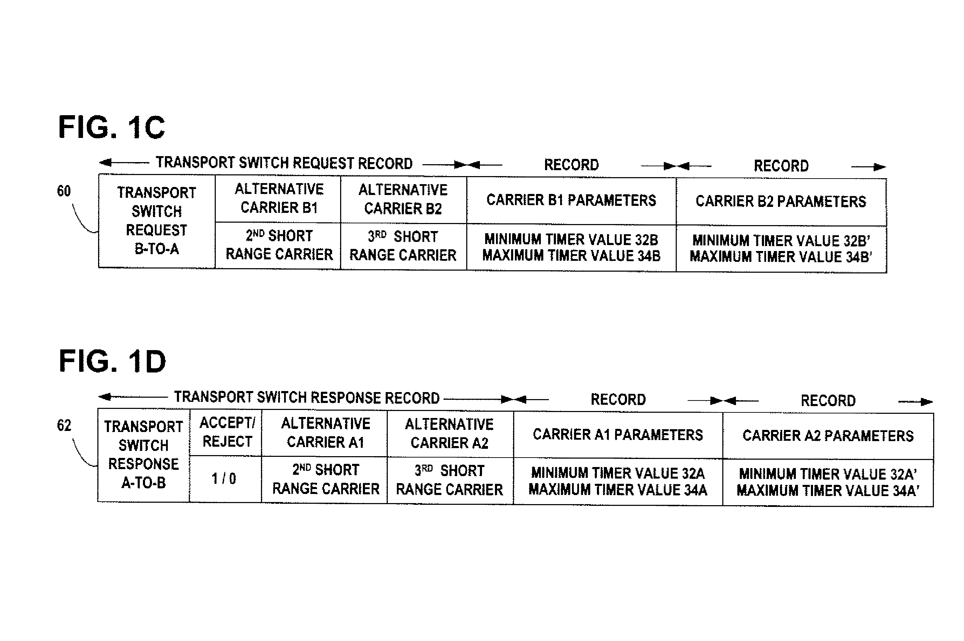

Figure 1C is an example embodiment of a transport switch request message from device B to device A, bearing the in-band short-range carrier communication connection parameters including the one or more parameters indicating the timer value of the interval related to the expected completion time of the transport switch procedure, according to an embodiment of the present invention.
Figure 1D is an example embodiment of a transport switch response message from device A to device B, bearing the one or more alternate parameters indicating the alternate timer value of the interval related to the expected completion time of a transport switch procedure, according to an embodiment of the present invention.
Figure IE is an example flow diagram of operational steps of an example embodiment of the method carried out between the two wireless devices of Figure 1A, according to an embodiment of the present invention.

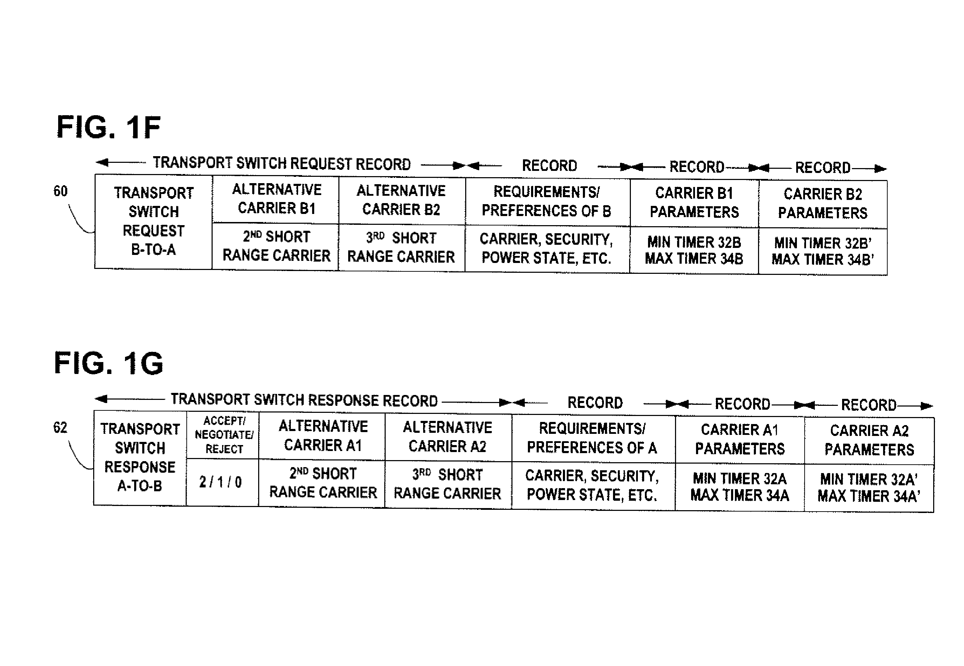

Figure 1F is an example embodiment of a transport switch request message from device B to device A, bearing the in-band short-range carrier communication connection parameters for requirements or preferences of device B for the in-band short-range carrier, security, power state, etc. and including the one or more parameters indicating the timer value of the interval related to the expected completion time of the transport switch procedure, according to an embodiment of the present invention.
Figure 1G is an example embodiment of a transport switch response message from device A to device B, bearing the one or more alternate parameters for alternate requirements or alternate preferences of device A for in-band short-range carrier, security, power state, etc. and indicating the alternate timer value of the interval related to the expected completion time of a transport switch procedure, according to an embodiment of the present invention.

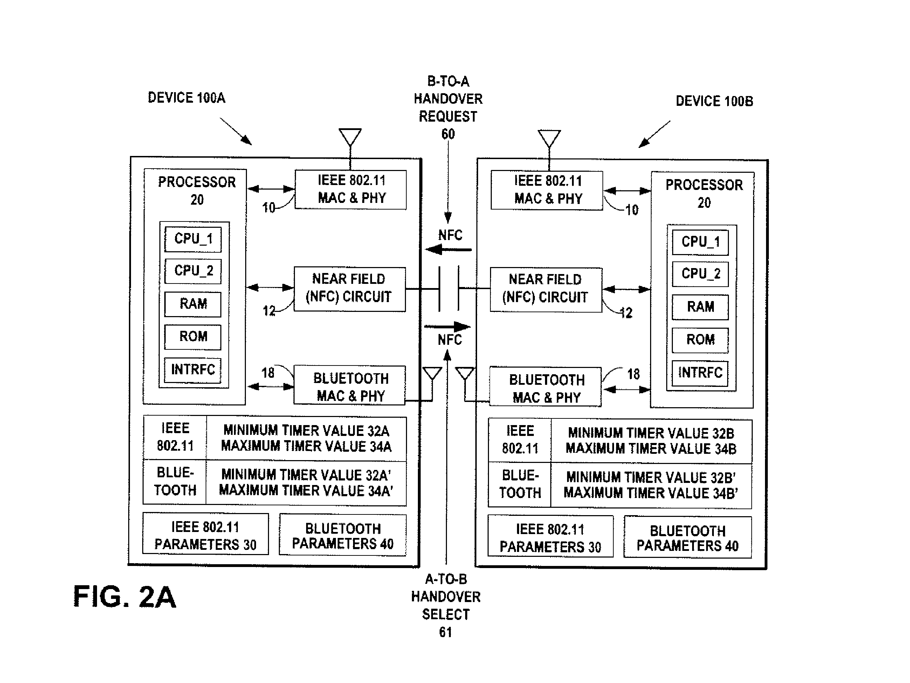

Figure 2A is an example embodiment of a wireless network diagram of wireless device A and wireless device B capable of forming either an IEEE 802.11 IBSS ad hoc network as the first in-band short-range carrier or a Bluetooth ad hoc network as the second in-band short-range carrier, by using near-field communication (NFC) signals in an out-of-band device-to-device connection setup, wherein device B indicates to device A that a third device will perform the connection setup with device A, according to an embodiment of the present invention.

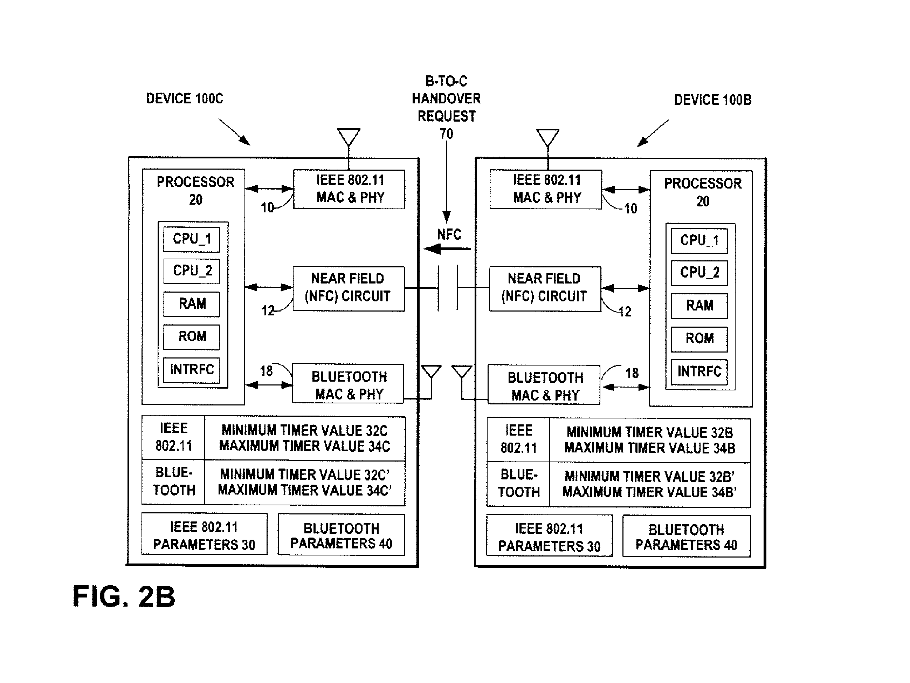

Figure 2B is an example embodiment of a wireless network diagram of wireless device C and wireless device B capable of forming either an IEEE 802.11 IBSS ad hoc network or a Bluetooth ad hoc network, by using near-field communication (NFC) signals in an out-of-band device-to-device connection setup, wherein device B provides device C with connectivity information of device A to enable device C to perform the connection setup with device A, according to an embodiment of the present invention.

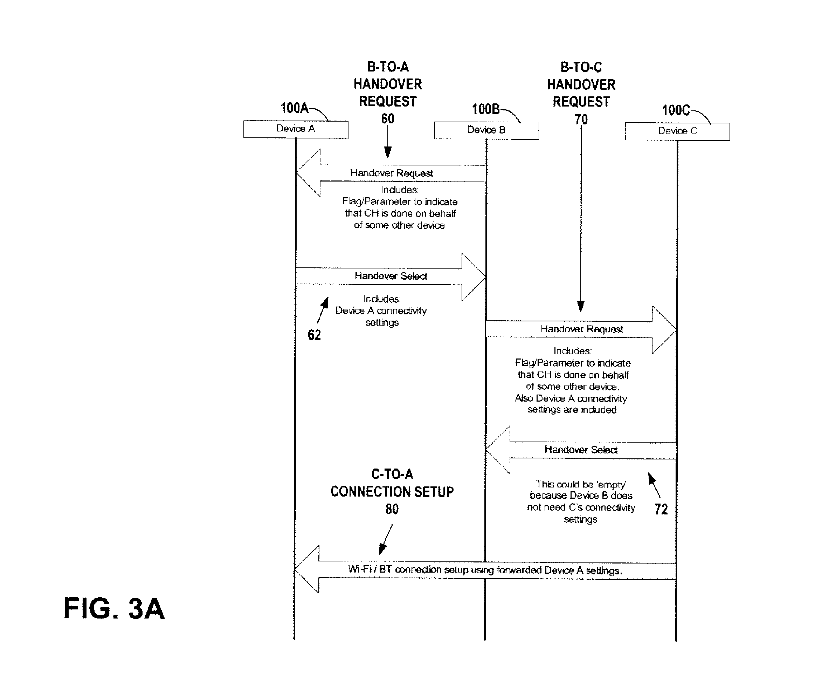

Figure 3A is an example embodiment of a sequence diagram of the three wireless devices A, B, and C of Figures 1A and 1B, wherein device B indicates to device A that a third device will perform the connection setup with device A, and device B provides device C with connectivity information of device A to enable device C to perform the connection setup with device A, according to an embodiment of the present invention.

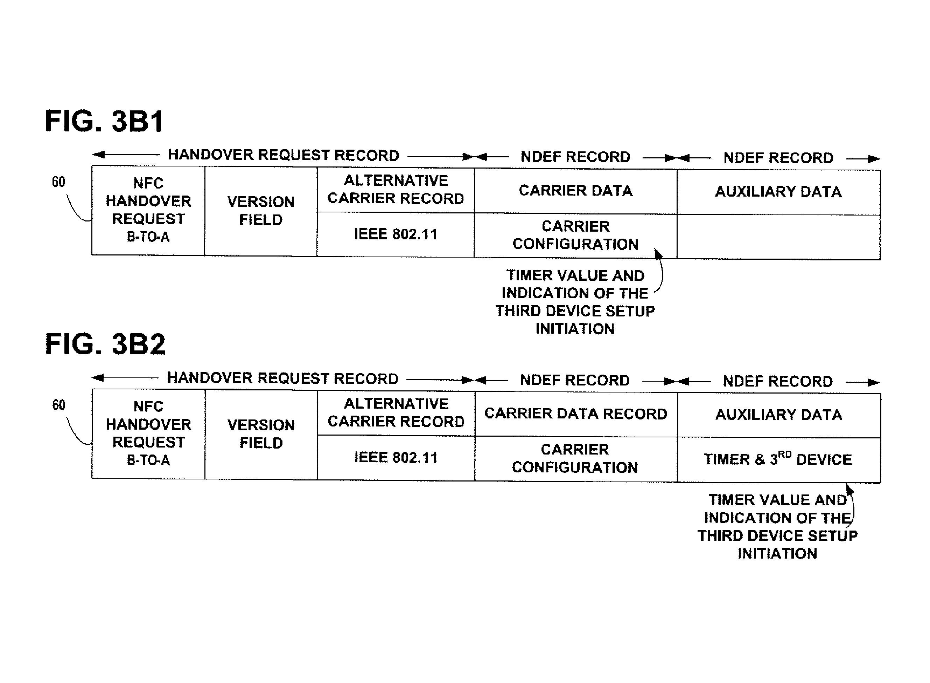

Figure 3B1 is an example embodiment NFC handover request message format from the first device to the second device with the additional WLAN parameters for a timer value related to an expected completion time of a connection handover procedure and an indication that a third device will perform a connection setup with the second device 100A in the carrier configuration NDEF record, sent by the requestor over the NFC link, according to an embodiment of the present invention.
Figure 3B2 is an example embodiment NFC handover request message 60 format from the first device to the second device with the additional WLAN parameters for the timer value and indication of the third device setup initiation in the auxiliary data NDEF record, sent by the requestor over the NFC link, according to an embodiment of the present invention.

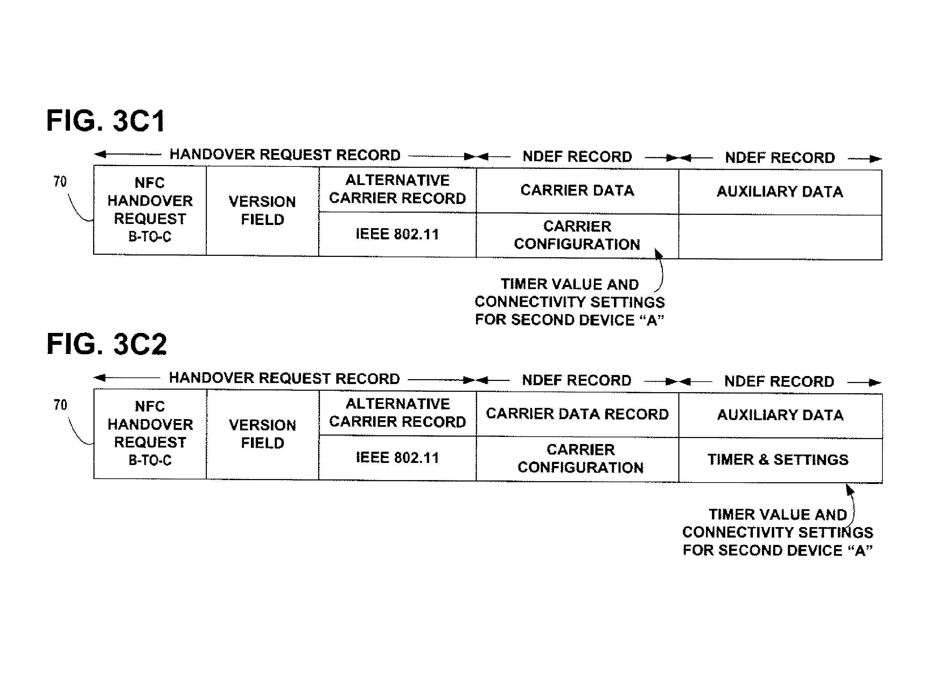

Figure 3C1 is an example embodiment NFC handover request message format from the first device to the third device with the additional WLAN parameters for a timer value related to an expected completion time of a connection handover procedure and connectivity settings of the second device that the third device will use to perform a connection setup with the second device in the carrier configuration NDEF record, sent by the requestor over the NFC link, according to an embodiment of the present invention.
Figure 3C2 is an example embodiment NFC handover request message format from the first device to the third device with the additional WLAN parameters for the timer value and connectivity settings of device in the auxiliary data NDEF record, sent by the requestor over the NFC link, according to an embodiment of the present invention.

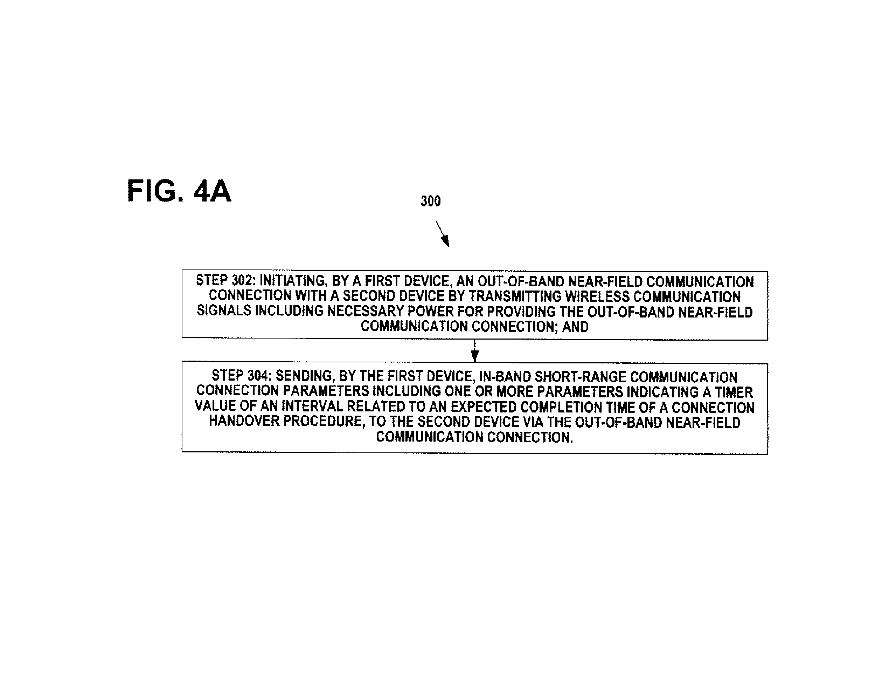

Figure 4A is an example flow diagram of operational steps of an example embodiment of the method carried out between the two wireless devices of Figure 2A, according to an embodiment of the present invention.

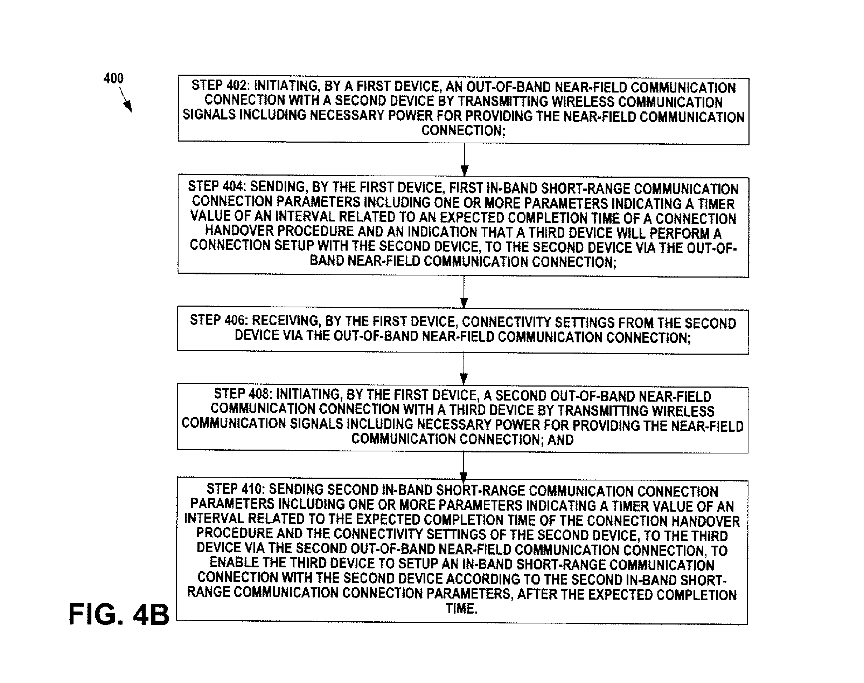

Figure 4B is an example flow diagram of operational steps of an example embodiment of the method carried out between the three wireless devices of Figures 1A and 1B operating in the example sequence shown in Figure 3A, from the point of view of the device 100B, according to an embodiment of the present invention.

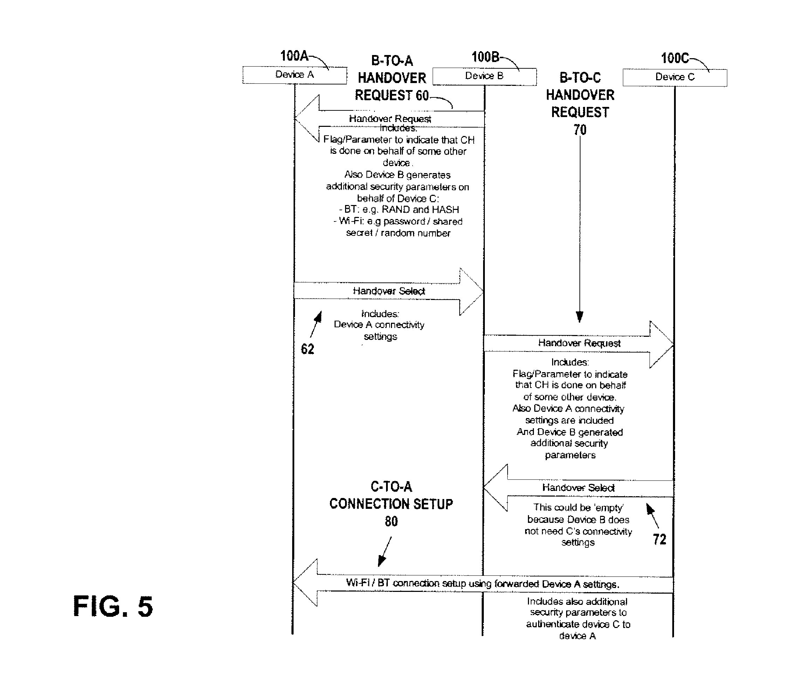

Figure 5 is an example embodiment of a sequence diagram of the three wireless devices A, B, and C of Figures 1A and 1B, with additional security, according to an embodiment of the present invention.

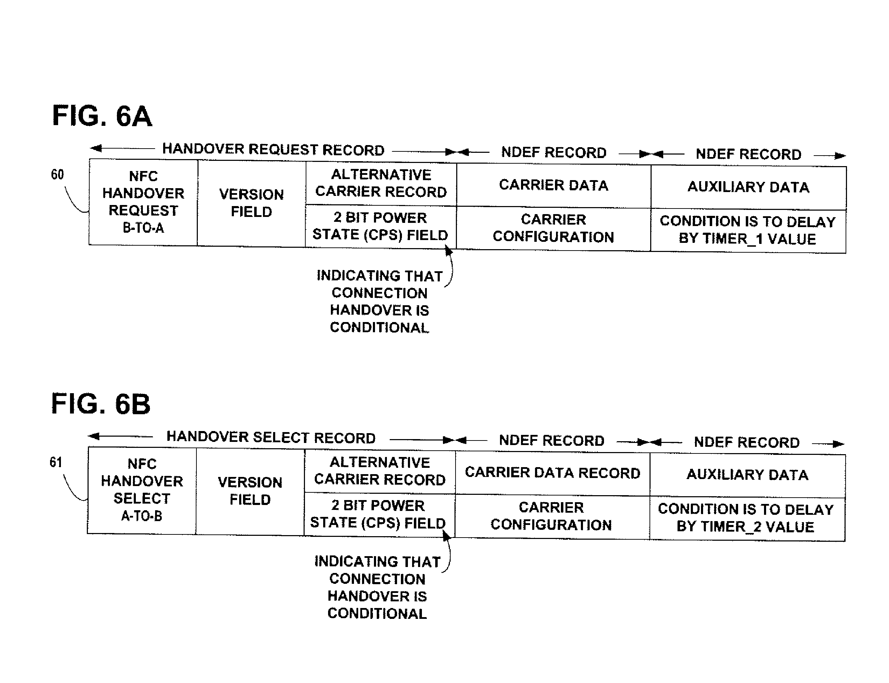

Figures 6A and 6B show that in the NFC Forum connection handover protocol, a Flag may be included in either the handover request message or the handover select message, indicating that the Connection Handover is conditional. An example condition may be that the handover is to be delayed by a timer value, according to an embodiment of the present invention.

### DISCUSSION OF EXAMPLE EMBODIMENTS OF THE INVENTION:

Wi-Fi refers to the family of related IEEE 802.11 specifications that specify methods and techniques of wireless local area network (WLAN) operation. Examples include the IEEE 802.11b and 802.11g wireless local area network specifications, which have been a staple technology for traditional Wi-Fi applications in the 2.4 GHz ISM band. Emerging broadband applications have stimulated interest in developing very high-speed wireless networks for short-range communication, for example, the IEEE 802.11n, the planned IEEE 802.11ac, and the planned IEEE 802.11ad WLAN specifications that are to provide a very high throughput in higher frequency bands. Wi-Fi applications include 802.11 products such as consumer electronics, telephones, personal computers, and access points for both for home and small office.

In an example application of Wi-Fi, a wireless router may be connected through a cable modem or DSL modem to the Internet and serves as a wireless access point for personal computers equipped with a wireless network interface card and for other wireless devices such as wireless repeaters using a Wi-Fi standard. Setting up a wireless router Wi-Fi network includes configuring the nodes of the network with security features enabled by the Wi-Fi network standard.

The Wi-Fi Alliance published the Wi-Fi Protected Setup (WPS) specification 1.0, Wi-Fi Protected Setup Specification, Version 1.0h, December 2006 (incorporated herein by reference), to facilitate the initial setting up of 802.11 devices in a Wi-Fi infrastructure network so that they may be more easily configured with security features and so that that new Wi-Fi devices may be added to the network. One of the methods provided by the Wi-Fi Protected Setup (WPS) Specification 1.0 is the Near-Field Communication (NFC) method, in which the user brings a new wireless client device (STA) close to an access point (AP) or Registrar of the Network to allow near field communication between the devices.

Near-field communication (NFC) technology used in the Wi-Fi Protected Setup (WPS) standard, communicates between two NFC Devices or between an NFC Device and an NFC Tag via magnetic field induction, where two loop antennas are located within each other's near field, effectively energizing a wireless contact by forming an air-core transformer. An example NFC radio operates within the unlicensed radio frequency ISM band of 13.56 MHz, with a bandwidth of approximately 2 MHz over a typical distance of a few centimeters. The NFC radio may be affixed to a new wireless client device (STA) and the user brings the NFC radio on the device close to an access point (AP) or Registrar of the Network to allow near field communication between the devices. NFC technology is an extension of the ISO/IEC 14443 proximity-card standard (incorporated herein by reference) for contactless smartcards and radio frequency ID (RFID) devices, which combines the interface of a contactless smartcard and a reader into a single device, and uses the ISO/IEC 18092 NFC communication standard (incorporated herein by reference) to enable two-way communication. An NFC radio may communicate with both existing ISO/IEC 14443 contactless smartcards and readers, as well as with other NFC devices by using ISO/IEC 18092. The NFC Forum ™, a non-profit industry association, has released specifications that enable different operation modes called: tag emulation, read/write mode, and peer to peer communication. Furthermore, NFC Forum has defined specifications for NFC Data Exchange Format (NDEF), NFC Tag Types, NFC Record Type Definition, and Connection Handover Specification. See, for example, Connection Handover Technical Specification, NFC Forum ™, Connection Handover 1.1, NFCForum-TS-ConnectionHandover_1 .1, 2008-11-06 (incorporated herein by reference). The ISO/IEC 18092 standard defines communication modes for Near Field Communication Interface and Protocol (NFCIP-1) using inductively coupled devices operating at the center frequency of 13,56 MHz for interconnection of computer peripherals. The ISO/IEC 18092 standard specifies modulation schemes, codings, transfer speeds and frame format of the RF interface, initialization schemes, conditions required for data collision control during initialization, and a transport protocol including protocol activation and data exchange methods.

The WPS 1.0 standard defines three types of components in a network: a Registrar, an Enrollee, and an Access Point (AP). A Registrar is a component with the authority to issue and revoke credentials to a network. A Registrar may be integrated into an AP or it may be separate from the AP. An Enrollee is a component seeking to join a wireless LAN network. An Authenticator is an AP functioning as a proxy between a Registrar and an Enrollee. A Registrar wireless device configures the Enrollee wireless device, and the AP acts as an Authenticator to proxy the relevant messages between the Registrar and the Enrollee. The messages exchanged in the session are a series of Extensible Authentication Protocol (EAP) request/response messages, ending with the Enrollee reconnecting to the network with its new configuration. EAP is an authentication framework defined in RFC 5247, for providing the transport and usage of keying material and parameters needed to establish a secure Wi-Fi network.

The Wi-Fi Protected Setup (WPS) 1.0 specification published by the Wi-Fi Alliance, Wi-Fi Protected Setup Specification, Version 1.0h, December 2006, defines a near-field communication (NFC) setup method for IEEE 802.111 WLAN Infrastructure setup that includes an access point (AP), and is currently the only official WPS specification. The access point (AP) defines the roles of registrar and enrollee for the requesting device and the selecting device. The Wi-Fi Protected Setup (WPS) 2.0 specification (to be published) updates the NFC setup method for WLAN Infrastructure mode that includes an access point (AP), but is not applicable to WLAN device-to-device (D2D) connection setup. Current WLAN device-to-device technologies include the IEEE 802.11 IBSS (Ad Hoc), Wi-Fi Direct networks, and Bluetooth.

The basic handover to a Wi-Fi carrier stores wireless LAN parameters and credentials on NFC Forum Tags as part of its Wi-Fi Protected Setup (WPS) specification 1.0. The information is stored in the payload of an NFC Data Exchange Format (NDEF) record identified by the mime-type "application/vnd.wfa.wsc", known as the "WPS Record". The wireless LAN parameters and credentials information provided inside a WPS Record includes the IEEE 802.11 Service Set Identifier (SSID), authentication and encryption type deployed by the wireless network, the secret network key that a wireless station needs to authenticate with the network, and the MAC address of the device receiving the configuration (if unknown, this address is set to all-zeros). The WPS specification 1.0 uses the term "Registrar" for a device that is able to provide WLAN credentials and "Enrollee" for a device that wants to join a wireless network.

In the WPS specification 2.0 (to be published), a Handover Requester with Wi-Fi capability may format an NFC Handover Request Message in the NFC Data Exchange Format (NDEF), that indicates that the requester is an IEEE 802.11 device, but which does not include any configuration information. A Handover Request may be sent via the NFC link in at least two scenarios: [1] the requester may not have yet joined a wireless domain or [2] even if the requester is already member of a WLAN network, a peer device may be in different network and thus a Connection Handover is required to obtain the peer device's credentials. In the WPS specification 2.0, the Handover Selector would deduce from this message that the Handover Requester supports a Wi-Fi certified IEEE 802.11 radio. In the WPS specification 2.0, if the Handover Selector is a Wi-Fi device with wireless connectivity, it should respond with an NFC Handover Select Message in the NFC Data Exchange Format (NDEF), with a configuration record that includes credentials, such as network index, SSID, authentication type, encryption type, network key, and MAC address.

The NFC Data Exchange Format (NDEF) specification, NFC Forum Data Exchange Format (NDEF) Specification, NFC Forum ™, 2006 (incorporated herein by reference), defines a common data format for NFC devices to exchange application or service specific data. An NDEF message is constructed of a number of NDEF records, with the first and the last record providing message begin and end markers. Between two NFC Devices, NDEF messages may be exchanged over the NFC Logical Link Control Protocol (LLCP) protocol, specified in NFC Forum Logical Link Control Protocol Specification, NFC Forum ™, 2009 (incorporated herein by reference). The NFC Connection Handover specification, NFC Forum Connection Handover Specification, NFC Forum ™, 2008 (incorporated herein by reference), defines the exchange of NDEF messages between two NFC Devices in a negotiated handover to discover and negotiate alternative wireless communication technologies.

The Handover Requester in the WPS specification 2.0, would then typically use the SSID and Network Key to enroll on the same Wi-Fi network to which the Handover Selector is connected. Further possible actions depend on the provision of an IP address identifying the Handover Selector, the available services, and the Handover Requester's intended activity.

The Wi-Fi Alliance is preparing a new WLAN device-to-device specification entitled Wi-Fi Direct, to enable Wi-Fi devices to connect to one another, point-to-point, without joining a network. The specification may be implemented in any Wi-Fi device. Devices that support the specification will be able to discover one another and advertise available services. Wi-Fi Direct devices will support typical Wi-Fi ranges and the same data rates as can be achieved with an infrastructure connection. Wi-Fi Direct provides point-to-point connections for networks by embedding a software access point into any device that wishes to support Wi-Fi Direct. The soft AP provides a version of Wi-Fi Protected Setup 1.0 by entering a PIN or pressing a button. When a device enters the range of the Wi-Fi Direct host, it may connect to it using the existing protocol, and then gather setup information using a Wi-Fi Protected Setup 1.0 transfer.

### EXAMPLE EMBODIMENT OF TRANSPORT SWITCHING

Method, apparatus, and computer program product embodiments are disclosed to enable out-of-band short-range communication carrier transport switching for connection setup in device-to-device communication.

Figure 1A is a wireless network diagram of an example embodiment of wireless device 100A and wireless device 100B, each equipped an out-of-band short-range carrier transceiver 12. The out-of-band short-range carrier may be a suitable short-range communications protocol, such as Radio Frequency Identification (RFID), Near Field Communication (NFC), Infrared Data Association (IrDA), or Ultra Wide Band (UWB), for example.

An example of the Radio Frequency Identification (RFID) out-of-band short-range carrier is described, for example, ISO 11785 (air interface protocol), ISO 14443 (air interface protocol), and ISO 15693, incorporated herein by reference.

An example of the Near Field Communication (NFC) out-of-band short-range carrier is described, for example, in ISO/IEC 14443 and ISO/IEC 18092, incorporated herein by reference.

An example of the Infrared Data Association (IrDA) out-of-band short-range carrier is described, for example, in IrDA Link Access Protocol v1.1 (1996), incorporated herein by reference.

An example of the Ultra Wide Band (UWB) out-of-band short-range carrier is described, for example, in WiMedia Common Radio Platform Specification, Version 1.5 (2010), incorporated herein by reference.

The wireless device 100A and wireless device 100B are each equipped with one or more in-band short-range carrier transceivers, for example the first in-band short range transceiver 10 and the second in-band short range transceiver 18. The in-band short-range carriers may be suitable short-range communications protocols, such as Bluetooth, IEEE 802.15.4 (ZigBee), HiperLAN, Wi-Fi Direct, or IEEE 802.11 WLAN, for example.

An example of the Bluetooth in-band short-range carrier is described, for example, in Bluetooth Core Specification, (June 30, 2010).

An example of the IEEE 802.15.4 (ZigBee) in-band short-range carrier is described, for example, in IEEE 802.15.4-2003 standard for Low-Rate Wireless Personal Area Networks (LR-WPANs) (2007).

An example of the HiperLAN in-band short-range carrier is described, for example, in ETSI standard EN300652 and ETS300836 (1996).

An example of the Wi-Fi Direct in-band short-range carrier is described, for example, in Wi-Fi Direct Peer-to-Peer specification (2009).

An example of the IEEE 802.11 WLAN in-band short-range carrier is described, for example, in IEEE 802.11-2007 Wireless LAN Medium Access Control and Physical Layer Specifications (2007)

Device 100 B is shown in Figure 1A initiating an out-of-band short-range carrier transport switch with device 100A by transmitting wireless communication signals for providing the out-of-band carrier communication connection.

Device 100B is shown in Figure 1A, then sending in-band short-range carrier communication connection parameters in a transport switch request message 60, including one or more parameters indicating a timer value of an interval related to an expected completion time of a transport switch procedure, to device 100A via the out-of-band short-range carrier communication connection.

An example embodiment of the one or more parameters in Device 100B for the first in-band short range communications protocol, indicating a timer value of an interval are the minimum timer value 32B and maximum timer value 34B. The one or more parameters in Device 100B for the second in-band short range communications protocol, indicating a timer value of an interval are the minimum timer value 32B' and maximum timer value 34B'.

In an example embodiment of the invention, the delayed transport switch procedure enables device 100B to inform device 100A that the connection may happen with a certain delay, for example a duration of 30 milliseconds. In an example embodiment of the invention, the timer value may be a maximum time parameter that enables device 100A to save battery power, because it knows how long it should stay awake, for example staying awake for a duration of 30 milliseconds. In an example embodiment of the invention, the timer value may be a minimum time parameter that informs device 100A of an instant after which the connection may be initiated by an initiator device, for example a Coordinated Universal Time (UTC) value of 09:00:00.000 UTC. In an example embodiment of the invention, the timer value may be a combination of a timestamp value, for example a Universal Coordinated Time value of 09:00:00.000 UTC, plus a duration value of 30 milliseconds, indicating an instant of the expected completion of a transport switch procedure.

Figure 1B is a wireless network diagram of an example embodiment of wireless device 100A and wireless device 100B of Figure 1A, with device 100B receiving from device 100A, a transport switch procedure response 62 including one or more alternate parameters indicating an alternate timer value of the interval related to the expected completion time of the transport switch procedure, via the out-of-band short-range carrier communication connection, according to an embodiment of the present invention. Device 100A and device 100B may use the response as a basis to negotiate a mutually agreeable delay interval.

An example embodiment of the one or more parameters in Device A for the first in-band short range communications protocol, indicating a timer value of an interval are the minimum timer value 32A and maximum timer value 34A. The one or more parameters in Device A for the second in-band short range communications protocol, indicating a timer value of an interval are the minimum timer value 32A' and maximum timer value 34A'.

Figure 1C is an example embodiment of the transport switch procedure request message 60 from device 100B to device 100A, bearing the in-band short-range carrier communication connection parameters including the one or more parameters 32B and 34B and 32B' and 34B' indicating the timer value of the interval related to the expected completion time of the transport switch procedure, according to an embodiment of the present invention.

Figure 1D is an example embodiment of the transport switch procedure response message 62 from device 100A to device 100B, bearing the one or more alternate parameters 32A and 34A and 32A' and 34A' indicating the alternate timer value of the interval related to the expected completion time of a transport switch procedure, according to an embodiment of the present invention.

Figure IE is an example flow diagram 64 of operational steps of an example embodiment of the method carried out between the two wireless devices of Figure 1A, according to an embodiment of the present invention. The steps of the flow diagram represent computer code instructions stored in the RAM and/or ROM memory of the wireless device 100B, which when executed by the central processing units (CPU), carry out the functions of the example embodiments of the invention. The steps may be carried out in another order than shown and individual steps may be combined or separated into component steps. Additional steps may be included in this sequence. The steps of the example method are as follows.

Step 66: initiating, by a first device, a short-range carrier transport switch procedure with a second device by transmitting wireless out-of-band short-range carrier communication signals for providing an out-of-band short-range carrier communication connection; and

Step 68: sending, by the first device, in-band short-range carrier communication connection parameters including one or more parameters indicating a timer value of an interval related to an expected completion time of the transport switch procedure, to the second device via the out-of-band short-range carrier communication connection, to enable the short-range carrier transport switch procedure to switch from the out-of-band short range carrier to the in-band short range carrier for communication between the devices.

Figure 1F is an example embodiment of a transport switch request message 60 from device 100B to device 100A, bearing the in-band short-range carrier communication connection parameters for requirements or preferences of device B for the in-band short-range carrier, security, power state, etc. and including the one or more parameters indicating the timer value of the interval related to the expected completion time of the transport switch procedure, according to an embodiment of the present invention. In example embodiments of the invention, the order of placement of the records in the request message 60 may differ for the requirements/preferences record and the carrier parameters records, depending on the particular solution.

Figure 1G is an example embodiment of a transport switch response message 62 from device 100A to device 100B, bearing the one or more alternate parameters for alternate requirements or alternate preferences of device A for in-band short-range carrier, security, power state, etc. and indicating the alternate timer value of the interval related to the expected completion time of a transport switch procedure, according to an embodiment of the present invention. The transport switch response message 62 includes a field for indicating whether device A accepts, rejects, or wants to negotiate the characteristics of the in-band short-range carrier represented by the parameters in the transport switch request message 60 from device 100B. In example embodiments of the invention, the order of placement of the records in the response message 62 may differ for the requirements/preferences record and the carrier parameters records, depending on the particular solution.

The resulting embodiments enable out-of-band short-range communication carrier transport switching for connection setup in device-to-device communication.

### EXAMPLE EMBODIMENT OF NFC CONNECTION HANDOVER

Figure 2A is a wireless network diagram of an example embodiment of wireless device A and wireless device B capable of forming either an IEEE 802.11 IBSS ad hoc network as the first in-band short-range carrier or a Bluetooth ad hoc network as the second in-band short-range carrier, by using near-field communication (NFC) signals in an out-of-band device-to-device connection setup.

The wireless device 100A and wireless device 100B are each equipped an out-of-band NFC transceiver 12 using the Near Field Communication (NFC) protocol. The wireless device 100A and wireless device 100B are each equipped with one or more in-band short-range carrier transceivers, for example the in-band short range transceiver 10 is an IEEE 802.11 protocol and the in-band short range transceiver 18 is Bluetooth, for example. The NFC protocol is out-of-band from the point of view of the in-band Wi-Fi and Bluetooth protocols.

Device 100 B is shown in Figure 1A initiating an out-of-band NFC connection handover with device 100A by the NFC transceiver 12 transmitting wireless communication signals for providing the NFC communication connection.

Device 100B is shown in Figure 2A, then sending IEEE 802.11 and/or Bluetooth short-range carrier communication connection parameters in a NFC connection handover request message 60, including one or more parameters indicating a timer value of an interval related to an expected completion time of a connection handover procedure, to device 100A via the out-of-band NFC communication connection.

An example embodiment of the one or more parameters in Device 100B for the IEEE 802.11 short range communications protocol, indicating a timer value of an interval are the minimum timer value 32B and maximum timer value 34B. The one or more parameters in Device 100B for the Bluetooth short range communications protocol, indicating a timer value of an interval are the minimum timer value 32B' and maximum timer value 34B'.

In an embodiment of the invention, the delayed connection handover enables device 100B to inform device 100A that the connection may happen with a certain delay. The maximum time parameter enables device 100A to save battery power, because it knows how long it should stay awake. The minimum time parameter informs device 100A of an instant after which the connection may be initiated by an initiator device.

In an example embodiment, the wireless device 100A and wireless device 100B of Figure 2A, may continue with device 100B receiving from device 100A, a NFC communication handover select message 61 including one or more alternate parameters indicating an alternate timer value of the interval related to the expected completion time of the connection handover procedure, via the out-of-band NFC communication connection, according to an embodiment of the present invention. Device 100A and device 100B may use the response as a basis to negotiate a mutually agreeable delay interval.

An example embodiment of the one or more parameters in Device A for the IEEE 802.11 short range communications protocol, indicating a timer value of an interval are the minimum timer value 32A and maximum timer value 34A. The one or more parameters in Device A for the Bluetooth short range communications protocol, indicating a timer value of an interval are the minimum timer value 32A' and maximum timer value 34A'.

Figure 4A is an example flow diagram 300 of operational steps of an example embodiment of the method carried out between the two wireless devices of Figure 2A, according to an embodiment of the present invention. The steps of the flow diagram represent computer code instructions stored in the RAM and/or ROM memory of the wireless device 100B, which when executed by the central processing units (CPU), carry out the functions of the example embodiments of the invention. The steps may be carried out in another order than shown and individual steps may be combined or separated into component steps. Additional steps may be included in this sequence. The steps of the example method are as follows.

Step 302: initiating, by a first device, an out-of-band near-field communication connection with a second device by transmitting wireless communication signals including necessary power for providing the out-of-band near-field communication connection; and

Step 304: sending, by the first device, in-band short-range communication connection parameters including one or more parameters indicating a timer value of an interval related to an expected completion time of a connection handover procedure, to the second device via the out-of-band near-field communication connection.

The resulting embodiments enable forming either an IEEE 802.11 IBSS ad hoc network as a first in-band short-range carrier or a Bluetooth ad hoc network as a second in-band short-range carrier, by using near-field communication (NFC) signals in an out-of-band device-to-device connection setup.

### EXAMPLE EMBODIMENT OF NFC HANDOVER RELAY TO THIRD DEVICE

The method, apparatus, and computer program product embodiments disclosed herein enable a first device to indicate to second device using near-field communication (NFC) signals, that a third device will perform the connection setup with the second device in an out-of-band device-to-device connection setup.

Figure 2A is an example embodiment of a wireless network diagram of wireless device A and wireless device B capable of forming either an IEEE 802.11 IBSS ad hoc network as the first in-band short-range carrier or a Bluetooth ad hoc network as the second in-band short-range carrier, by using near-field communication (NFC) signals in an out-of-band device-to-device connection setup, wherein device B indicates to device A that a third device will perform the connection setup with device A, according to an embodiment of the present invention.

Example embodiments of the invention may operate in various network topologies, including Independent BSS (IBSS), IEEE 802.11 Peer-to-peer BSS, Mesh BSS (MBSS), and Bluetooth. Example embodiments of the invention may operate in all frequency bands, for example the 2.4GHz ISM band, the 5.0GHz band for the IEEE 802.11ac standard, up beyond the 60GHz band for the IEEE 802.11ad standard.

In an example embodiment, the wireless device 100B may be a communications device, PDA, cell phone, laptop or palmtop computer, or the like. The wireless device 100B of Figure 2A includes a processor 20, which includes a dual core central processing unit (CPU_1 and CPU_2), a random access memory (RAM), a read only memory (ROM), and interface circuits to interface with one or more radio transceivers 10, battery and other power sources, key pad, touch screen, display, microphone, speakers, ear pieces, camera or other imaging devices, etc. in the devices 100A. The RAM and ROM can be removable memory devices such as smart cards, SIMs, WIMs, semiconductor memories such as RAM, ROM, PROMS, flash memory devices, etc. The IEEE 802.11 MAC and PHY 10 provide the medium access control and radio for IEEE 802.11 WLAN communications. A Bluetooth MAC and PHY 18 are provided and Bluetooth parameters 40 are included, having similar types of parameters as in the IEEE 802.11 parameters 30. The wireless device 100A has similar components to those in device 100B.

In the example embodiment, the first device 100B initiates an out-of-band near-field communication connection with the second device 100A by transmitting wireless communication signals including necessary power for providing the near-field communication connection. Then the first device 100B sends a handover request message 60 including in-band short-range communication connection parameters including one or more parameters indicating a timer value of an interval related to an expected completion time of a connection handover procedure and an indication that a third device 100C will perform a connection setup with the second device 100A, to the second device 100A via the out-of-band near-field communication connection, as shown in the example sequence diagram of Figure 3A.

The timer value may specify the maximum time device 100A is to keep its radio turned on to enable it to accept incoming connection requests from the third device 100C. The timer value may also specify the minimum time after which the connection will be initiated by the third device 100C.

Device 100A then responds by replying to device B with device A's handover select message 62 that includes device A's connectivity settings, as shown in the example sequence diagram of Figure 3A. These connectivity settings will enable the third device C to perform the connection setup with device A.

The NFC circuit 12 in device 100B, used in the Wi-Fi Protected Setup (WPS) standard, communicates bidirectionally with NFC circuit 12 in device 100A via magnetic field induction, where two loop antennas are located within each other's near field, effectively energizing a wireless contact by forming an air-core transformer. An example NFC radio of NFC circuit 12 operates within the unlicensed radio frequency ISM band of 13.56 MHz, with a bandwidth of approximately 2 MHz over a typical distance of a few centimeters. The NFC circuit 12 may be affixed to a new wireless client device 100B and the user brings the NFC radio on the device close to the NFC circuit 12 of the second device 100A to allow near field, bidirectional communication between the devices. NFC technology is an extension of the ISO/IEC 14443 proximity-card standard for contactless smartcards and radio frequency ID (RFID) devices, which combines the interface of a contactless smartcard and a reader into a single device, and uses the ISO/IEC 18092 NFC communication standard to enable two-way communication. An NFC radio may communicate with both existing ISO/IEC 14443 contactless smartcards and readers, as well as with other NFC devices by using ISO/IEC 18092.

When two NFC Devices 100A and 100B are brought into close proximity, they may establish NFC communication based on the NFC Forum Logical Link Control Protocol (LLCP) specification. If one of the devices 100B has intention to activate a further (wireless) communication method, it may then use the NFC Forum Connection Handover protocol to announce possible communication means, including its suggestion for configuration data, and request the other device 100A to respond with its selection of matching technologies, including its suggestion for configuration data. When an NFC requestor device 100B has established LLCP communication with an NFC selector device 100A, the requestor device 100B sends a handover request message 60 with its suggestion for WLAN parameters including one or more parameters indicating a timer value of an interval related to an expected completion time of a connection handover procedure and an indication that a third device 100C will perform a connection setup with the second device 100A. The NFC selector device 100A responds with a handover select message 62 with its suggestion for WLAN parameters, including device 100A's connectivity settings, as shown in the example sequence diagram of Figure 3A.

In example embodiments of the invention, the NFC circuit 12 in devices 100A and/or 100B of Figure 2A may be a contactless smartcard and a reader having characteristics similar to those described in the ISO/IEC 14443 proximity-card standard, the smartcard and reader being associated or combined as a single component capable of two-way communication, and uses the ISO/IEC 18092 NFC communication standard to enable both devices 100A and 100B send parameters to each other, according to an embodiment of the present invention.

The IEEE 802.11 parameters 30 may include the wireless LAN parameters and credentials information for the IEEE 802.11 Service Set Identifier (SSID), authentication and encryption type deployed by the wireless network, the secret network key that a wireless station needs to authenticate with the network, and the MAC address of the device receiving the configuration (if unknown, this address is set to all-zeros).

The Bluetooth parameters 40 may include a Bluetooth piconet identifier, authentication and encryption type deployed by the wireless network, a network key that a wireless station needs to authenticate with the network, and an address of a device receiving the configuration, if known.

The Wi-Fi Protected Setup Program may be stored in the memory of devices 100A, 100B, and 100C, based on the existing Wi-Fi Protected Setup (WPS) 2.0 specification, to enable setting up a device-to-device wireless network with a second wireless device, using near-field communication signals in the out-of-band device-to-device connection setup. Also included are the existing Wi-Fi Protected Setup (WPS) 2.0 specification methods for NFC, including the Connection Handover specified for Infrastructure WLAN setup, Password Token (tag) for Infrastructure WLAN setup, and Configuration Token (tag) for Infrastructure WLAN setup.

The IEEE MAC 10, IEEE 802.11 parameters 30, Bluetooth MAC 18 and Bluetooth parameters 40 may be embodied as program logic stored in the RAM and/or ROM in the form of sequences of programmed instructions which, when executed in the CPU, carry out the functions of the disclosed embodiments. The program logic can be delivered to the writeable RAM, PROMS, flash memory devices, etc. of the wireless device 100A from a computer program product or article of manufacture in the form of computer-usable media such as resident memory devices, smart cards or other removable memory devices. Alternately, they can be embodied as integrated circuit logic in the form of programmed logic arrays or custom designed application specific integrated circuits (ASIC). The one or more PHY radios 10 in the wireless device 100A or 100B may be separate transceiver circuits or alternately, the one or more radios 10 may be a single RF module capable of handling one or multiple channels in a high speed, time and frequency multiplexed manner in response to the processor 20. Both device A and device B may have the same or similar components as described for device A.

Figure 2B is an example embodiment of a wireless network diagram of wireless device 100C and wireless device 100B capable of forming either an IEEE 802.11 IBSS ad hoc network or a Bluetooth ad hoc network, by using near-field communication (NFC) signals in an out-of-band device-to-device connection setup, wherein device 100B provides device 100C with connectivity information of device 100A obtained in Figure 2A, to enable device 100C to perform the connection setup with device 100A, according to an embodiment of the present invention. Device 100C may have the same or similar components as described for device 100A and device 100B.

As shown in the example sequence diagram of Figure 3A, the first device 100B initiates a second out-of-band near-field communication connection with the third device 100C by transmitting wireless communication signals including necessary power for providing the near-field communication connection. Then the first device 100B sends a handover request message 70 to the third device 100C, including in-band short-range communication connection parameters including one or more parameters indicating a timer value of an interval related to an expected completion time of a connection handover procedure and the connectivity settings of the second device 100A, via the second out-of-band near-field communication connection, to enable the third device 100C to setup a short-range communication connection with the second device 100A, based on the in-band short-range communication connection parameters, after the expected completion time, according to an embodiment of the present invention.

In an alternate example embodiment of the invention, RFID transponders may be used in devices A, B, and/or C, which may be the passive type or the active type, as provided in the Wi-Fi Protected Setup (WPS) standard. A passive RFID transponder requires no internal power source to communicate with an RFID reader, and is only active when it is near an RFID reader that energizes the transponder with a continuous radio frequency signal at a resonant frequency of the antenna. The small electrical current induced in the antenna by the continuous radio frequency signal provides enough power for the integrated circuit in the transponder to power up and transmit a modulated response, typically by backscattering the continuous carrier wave from the RFID reader. A passive RFID transponder may include writable electrically erasable, programmable, read-only memory (EEPROM) for storing data received from the RFID reader, which modulates the continuous carrier wave sent by the RFID reader. Reading distances for passive RFID transponders typically range from a few centimeters to a few meters, depending on the radio frequency and antenna design. By contrast, active RFID transponders require a power source to receive and transmit information with an RFID reader. The RFID transponder may be affixed to a new wireless client device 100A and the user brings the RFID transponder on the device 100A close to the reader a device 100B to allow near field communication between the devices.

Figure 3A is an example embodiment of a sequence diagram of the three wireless devices 100A, 100B, and 100C of Figures 1A and 1B, according to an embodiment of the present invention, wherein near-field communication (NFC) is used as an out-of-band initialization method for device-to-device connection setup for Wi-Fi or Bluetooth.

In an example embodiment of the invention, the handover connection is to be established between device A (100A) and device C (100C), with device B (100B) working as a relay entity. There are at least two cases:
[1] If device B knows the identity of either device A or C, device B may include the identity of one the devices (either A or C) in the connection handover request message 60 for the other device.
[2] If device B does not know the identity of neither device A nor device C, it may set the flag in the connection handover request message 60 that the connection is to be setup by another device.

In the example embodiment shown in Figure 3A, device 100 B touches device 100A first and device 100C second. When device 100B touches 100A, device 100B may not have any information about the device 100C. Device 100B may inform device 100A that the connection handover is to be between device 100A and another device whose identity is not be known at the moment. After the touch, device 100B acquires some information about device 100A. Then, when device 100B touches device 100C, device B is able to provide to device 100C detailed information about device 100A that is to be the other party in the connection handover procedure. Even though device A does not know who will be the other party in the communication, device 100C has sufficient information to initiate the communication with device 100A.

The NFC touch or energization takes place when the NFC circuits are placed in close proximity. Device 100B generates parameters and sends them to device 100A in the NFC handover request 60. Device 100A generates parameters including its connectivity settings and sends them to device 100B in the NFC handover select 62. Then device 100B generates parameters and the connectivity settings of device 100A and sends them to device 100C in the NFC handover request 70. Device 100C generates parameters and sends them to device 100B in the NFC handover select 72. Then, after expiration of the timer value, the device 100C performs the WLAN connection setup 80 with device A using the forwarded settings for device A obtained in the handover request from device B, according to an embodiment of the present invention.

Figure 3B1 is an example embodiment NFC handover request message 60 format from the first device 100B to the second device 100A with the additional WLAN parameters including one or more parameters indicating a timer value of an interval related to an expected completion time of a connection handover procedure and an indication that a third device 100C will perform a connection setup with the second device 100A in the carrier configuration NDEF record, sent by the requestor over the NFC link, according to an embodiment of the present invention. A new NDEF record is added to carry the additional information needed for the timer value and indication of the third device setup initiation. NDEF messages enable a handover requester 100B to negotiate the additional the timer value and indication of the third device setup initiation with the handover selector 100A over the NFC link.

The handover request message 60 is composed of a handover request record that identifies the version of the handover specification being used, and the alternative carrier record that identifies the target carrier type to which that handover is directed, such as a handover from the NFC link to an IEEE 802.11 WLAN link. The handover request record may have a plurality of alternative carrier records, one for each of a plurality of possible target carriers. The handover request record is followed by several NDEF records. Each alternative carrier record in the handover request record includes pointers to related NDEF records. The first NDEF record pointed to by an alternative carrier record contains carrier configuration characterizing the intended target carrier, such as IEEE 802.11. The following NDEF record pointed to by the alternative carrier record contains auxiliary data associated with the intended target carrier or other information related to the handover to the target carrier.

There are two alternatives for locating the additional information needed for the timer value and indication of the third device setup initiation being sent in the handover request message 60; either including the additional WLAN parameters for the timer value and indication of the third device setup initiation in the carrier configuration NDEF record, as shown in Figure 3B1, or alternately including the additional WLAN parameters for the timer value and indication of the third device setup initiation in the auxiliary data NDEF record, as shown in Figure 3B2. Figure 3B2 is an example embodiment NFC handover request message 60 format from the first device 100B to the second device 100A with the additional WLAN parameters for the timer value and indication of the third device setup initiation in the auxiliary data NDEF record, sent by the requestor 100B over the NFC link, according to an embodiment of the present invention.

The handover select messages 62 sent from the second device, selector 100A to the first device, requestor 100B may be similarly constructed as are the handover request messages 60. A new NDEF record may added to carry the additional information needed to either acknowledge the request and provide connectivity settings for the second device 100A or to respond with an alternate proposal for the timer value and indication of the third device setup initiation, sent by the selector 100A over the NFC link, according to an embodiment of the present invention.

Figure 3C1 is an example embodiment NFC handover request message 70 format from the first device 100B to the third device 100C with the additional WLAN parameters including one or more parameters indicating a timer value of an interval related to an expected completion time of a connection handover procedure and connectivity settings of the second device 100A that the third device 100C will use to perform a connection setup with the second device 100A in the carrier configuration NDEF record, sent by the requestor 100B over the NFC link, according to an embodiment of the present invention. A new NDEF record is added to carry the additional information needed for the timer value and connectivity settings. NDEF messages enable a handover requester 100B to negotiate the additional the timer value and indication of the third device setup initiation with the handover selector 100C over the NFC link. The handover request message 70 is composed of a handover request record that identifies the version of the handover specification being used, and the alternative carrier record that identifies the target carrier type to which that handover is directed, such as a handover from the NFC link to a IEEE 802.11 WLAN link. The handover request record may have a plurality of alternative carrier records, one for each of a plurality of possible target carriers. The handover request record is followed by several NDEF records. Each alternative carrier record in the handover request record includes pointers to related NDEF records. The first NDEF record pointed to by an alternative carrier record contains carrier configuration characterizing the intended target carrier, such as IEEE 802.11 WLAN. The following NDEF record pointed to by the alternative carrier record contains auxiliary data associated with the intended target carrier or other information related to the handover to the target carrier. The connectivity settings for device 100 A are included.

There are two alternatives for locating the additional information needed for the timer value and connectivity settings being sent in the handover request message 70; either including the additional WLAN parameters for the timer value and connectivity settings of device 100A in the carrier configuration NDEF record, as shown in Figure 3C1, or alternately including the additional WLAN parameters for the timer value and connectivity settings of device 100A in the auxiliary data NDEF record, as shown in Figure 3C2. Figure 3C2 is an example embodiment NFC handover request message 70 format from the first device 100B to the third device 100C with the additional WLAN parameters for the timer value and connectivity settings of device 100A in the auxiliary data NDEF record, sent by the requestor 100B over the NFC link, according to an embodiment of the present invention.

The handover select messages 72 sent from the third device, selector 100C to the first device, requestor 100B may be similarly constructed as are the handover request messages 70. A new NDEF record may added to carry the additional information needed to either acknowledge the request or to respond with an alternate proposal for the timer value and connectivity settings of device 100A , sent by the selector 100C over the NFC link, according to an embodiment of the present invention.

The connection handover request messages 60 and 70 include the timer value related to the expected completion time of the connection handover procedure. There are at least two different types of timers:
[1] A timer specifying the maximum time the selector device may keep its radio on to enable accepting incoming connection requests.
[2] A timer specifying the minimum time, after which the connection may be initiated by the initiator device.

Either or both timers may be included as part of the connection handover request messages 60 and 70.

In further example embodiments of the invention, after expiration of the timer value, the device 100C performs the WLAN connection setup 80 with device 100 A using the forwarded settings for device A obtained in the handover request from device B. The connection may be setup, for example, employing IEEE 802.11 MAC frames (See the base standard IEEE 802.11-2007, Sec. 7. Frame formats, incorporated herein by reference).

Figure 4B is an example flow diagram 400 of operational steps of an example embodiment of the method carried out between the three wireless devices 100A, 100B, and 100C of Figures 1A and 1B operating in the example sequence shown in Figure 3A, from the point of view of the device 100B. The device 100B sends to device 100A, in-band short-range communication connection parameters for a timer value related to an expected completion time of a connection handover procedure and an indication that a third device 100C will perform a connection setup with the second device 100A, via the out-of-band near-field communication connection. The steps of the flow diagram represent computer code instructions stored in the RAM and/or ROM memory of the wireless device 100B, which when executed by the central processing units (CPU), carry out the functions of the example embodiments of the invention. The steps may be carried out in another order than shown and individual steps may be combined or separated into component steps.

Additional steps may be inserted into this sequence. The steps of the example method are as follows.
Step 402: initiating, by a first device, an out-of-band near-field communication connection with a second device by transmitting wireless communication signals including necessary power for providing the near-field communication connection;
Step 404: sending, by the first device, in-band short-range communication connection parameters including one or more parameters indicating a timer value of an interval related to an expected completion time of a connection handover procedure and an indication that a third device will perform a connection setup with the second device, to the second device via the out-of-band near-field communication connection;
Step 406: receiving, by the first device, connectivity settings from the second device via the out-of-band near-field communication connection;
Step 408: initiating, by the first device, a second out-of-band near-field communication connection with a third device by transmitting wireless communication signals including necessary power for providing the near-field communication connection; and
Step 410: sending in-band short-range communication connection parameters including one or more parameters indicating a timer value of an interval related to the expected completion time of the connection handover procedure and the connectivity settings of the second device, to the third device via the second out-of-band near-field communication connection, to enable the third device to setup an in-band short-range communication connection with the second device according to the in-band short-range communication connection parameters, after the expected completion time.

In an example embodiment of the invention, the timer value specified by the initiating device B may be a specifically designated instant for the expected completion of the connection handover procedure. In another example embodiment of the invention, the timer value specified by the initiating device B may be a duration before the expected completion of the connection handover procedure.

In the Relay Connection Handover of Device A, Device B, and Device C, the Delayed Connection Handover has enables a more reliable configuration protocol between the three devices, since each device may be informed for how long it should wait. Figure 5 is an example embodiment of a sequence diagram of the three wireless devices A, B, and C of Figures 2A and 2B, with additional security. To enable security, device 100A may share with device 100B a "secret" that will then be part of the connection initiation between device 100 C and 100A. For example, this may be the Bluetooth Secure Simple Pairing Association or the Wi-Fi Pre-Shared key. The fact that device B has informed device A that the connection is going to be made by another device allows device A to accept connections coming from an "unknown" device. The example embodiment enables authentication of device 100C to device 100A in the connection handover by device 100B.

The handover request 60 from device 100B to device 100A includes a Flag/Parameter to indicate that the connection handover is done on behalf of some other device, such as device 100C. Also, device 100B generates additional security parameters on behalf of device 100C: In Bluetooth the security parameters may be the Simple Pairing Randomizer R and the Simple Pairing Hash C. The computation of security parameters C and R is described in the Bluetooth Core Specification, Volume 2, Part H, Section 7.2.2, page 892 (June 30, 2010), which is incorporated herein by reference. In IEEE 801.11 or Wi-Fi Direct, the security parameters may be password / shared secret / random number.

The handover select from device 100A to device 100B includes device 100A connectivity settings.

The handover request 70 from device 100B to device 100C includes a Flag/Parameter to indicate that connection handover is done on behalf of some other device, such as device 100A. Also the device 100A connectivity settings are included and the additional security parameters generated by device 100B.

The Handover Select 72 from device 100C to device 100B may be "empty" because device 100B does not need device 100C's connectivity settings.

The IEEE 801.11, Wi-Fi Direct, or Bluetooth, connection setup 80 from device 100C to device 100A uses the forwarded settings for device 100A and also includes the additional security parameters to authenticate device 100C to device 100A.

The resulting example embodiment enables authentication of device 100C to device 100A in the connection handover by device 100B.

An example embodiment of the invention includes an apparatus comprising:
means for initiating, by a first device, a short-range carrier transport switch procedure with a second device by transmitting wireless out-of-band short-range carrier communication signals for providing an out-of-band short-range carrier communication connection; and
means for sending, by the first device, in-band short-range carrier communication connection parameters including one or more parameters indicating a timer value of an interval related to an expected completion time of the transport switch procedure, to the second device via the out-of-band short-range carrier communication connection, to enable the short-range carrier transport switch procedure to switch from the out-of-band short range carrier to the in-band short range carrier for communication between the devices.

An example embodiment of the invention includes an apparatus comprising:
means for initiating, by a first device, a short-range carrier transport switch procedure with a second device by transmitting wireless out-of-band short-range carrier communication signals for providing an out-of-band short-range carrier communication connection;
means for sending, by the first device, in-band short-range carrier communication connection parameters including one or more parameters indicating a timer value of an interval related to an expected completion time of the transport switch procedure and an indication that a third device will perform a connection setup with the second device, to the second device via the out-of-band short-range carrier communication connection;
means for receiving, by the first device, connectivity settings from the second device via the out-of-band short-range carrier communication connection;
means for initiating, by the first device, a short-range carrier transport switch procedure with a third device by transmitting wireless communication signals providing a second out-of-band short-range carrier communication connection; and
means for sending, by the first device, in-band short-range carrier communication connection parameters including one or more parameters indicating a timer value of an interval related to the expected completion time of the transport switch procedure, and the connectivity settings of the second device, to the third device via the second out-of-band short-range carrier communication connection, to enable the third device to setup an in-band short-range carrier communication connection with the second device according to the in-band short-range carrier communication connection parameters, after the expected completion time.

In an embodiment of the invention, Figures 6A and 6B show that in the NFC Forum connection handover protocol, a Flag may be included in either the handover request message 60 or the handover select message 61, indicating that the Connection Handover is conditional. An example condition may be that the handover is to be delayed by a timer value. The delay may be in a handover to another device.

Figures 6A and 6B show that the Connection Handover Request message 60 and Connection Handover Select message 61 have an Alternative Carrier record that has a two-bit Carrier Power State (CPS) field. By re-defining those two bits in the CPS field, a conditional handover flag may be included in the CPS field. The Timer information may be included in another record, such as the auxiliary data record.

In Figure 6A, the handover request message 60 from device B to device A is shown. The Alternative Carrier record's two-bit Carrier Power State (CPS) field uses those two bits as the conditional handover flag to indicate that device B wants this handover to be a conditional handover. The information detailing the condition that device B wants for the handover is included in the auxiliary data record, which indicates that the condition is that the handover is to be delayed by the Timer _1 value. A default timer value of, for example, one minute, may be used, if an explicit timer value is not provided in the message.

In Figure 6B, the handover select message 61 from device A to device B is shown. The Alternative Carrier record's two-bit Carrier Power State (CPS) field uses those two bits as the conditional handover flag to indicate that device A wants this handover to be a conditional handover. The information detailing the condition that device A wants for the handover is included in the auxiliary data record, which indicates that the condition is that the handover is to be delayed by the Timer_2 value. A default timer value of, for example, one minute, may be used, if an explicit timer value is not provided in the message.

In an example embodiment of the invention, Device A may be a member of an Infrastructure WLAN network and it may be a single WLAN radio device (two parallel WLAN connections are not possible). Device A may support the IBSS protocol or the P2P (Wi-Fi Direct) protocol. In this example, Device B may not be a member of any WLAN network, but it supports the IBSS protocol or the P2P protocol. In this example for just two devices, assume that Device A is not allowed to send Infrastructure network credentials, so that only the IBSS and/or P2P protocols are applicable for device-to-device communication. But, due to the single radio limitation for Device A, it may use the IBSS protocol and/or the P2P protocol only after closing its existing Infrastructure connection. When the NFC connection handover is performed between the two devices, either the IBSS protocol or the P2P protocol is the only applicable access method. But, typically, closing an existing WLAN connection (Infrastructure in this example) and creating another connection would require user permission, for example displaying a user query to the user of device A: "Do you want close connection X and create connection Y?" But, a user query cannot be made during the NFC connection, but only afterwards. Moreover, it is unpredictable how fast the user of device A will respond to this query and whether the user grants permission in his answer to user query. Thus, if either the IBSS protocol or the P2P protocol is negotiated, device B cannot know when this query is performed by the user of device A or whether device A is able to use the negotiated mode at all. However, if device A has some time delay to respond to the user query, and this timer value is included in the Connection Handover select message 61 from device A to device B, then B would know how long it should wait before assuming failure of its handover request. Device B would keep its WLAN radio on for that delay time. Furthermore, this scenario is also applicable where both devices A and B need to perform a user query, and the timer information may be exchanged in both directions; both in the handover request 60 and in the handover select 61.

Using the description provided herein, the embodiments may be implemented as a machine, process, or article of manufacture by using standard programming and/or engineering techniques to produce programming software, firmware, hardware or any combination thereof.

Any resulting program(s), having computer-readable program code, may be embodied on one or more computer-usable media such as resident memory devices, smart cards or other removable memory devices, or transmitting devices, thereby making a computer program product or article of manufacture according to the embodiments. As such, the terms "article of manufacture" and "computer program product" as used herein are intended to encompass a computer program that exists permanently or temporarily on any computer-usable medium or in any transmitting medium which transmits such a program.

As indicated above, memory/storage devices include, but are not limited to, disks, optical disks, removable memory devices such as smart cards, SIMs, WIMs, semiconductor memories such as RAM, ROM, PROMS, etc. Transmitting mediums include, but are not limited to, transmissions via wireless communication networks, the Internet, intranets, telephone/modem-based network communication, hard-wired/cabled communication network, satellite communication, and other stationary or mobile network systems/communication links.

## Claims

1. A method, comprising:
initiating, by a first device, a short-range carrier transport switch procedure with a second device by transmitting wireless out-of-band short-range carrier communication signals for providing an out-of-band short-range carrier communication connection; and
sending, by the first device, in-band short-range carrier communication connection parameters including one or more parameters indicating a timer value of an interval related to an expected completion time of the transport switch procedure, to the second device via the out-of-band short-range carrier communication connection, to enable the short-range carrier transport switch procedure to switch from the out-of-band short range carrier to the in-band short range carrier for communication between the devices.

2. The method of claim 1, wherein the expected completion time of the transport switch procedure is a maximum time the second device may keep its radio on to enable accepting incoming connection requests.

3. The method of claim 1, wherein the expected completion time of the transport switch procedure is a minimum time, after which the connection may be initiated by an initiator device.

4. The method of claim 1, further comprising:
receiving, by the first device from the second device, a response including one or more alternate parameters indicating an alternate timer value of the interval related to an expected completion time of a transport switch procedure, via the out-of-band short-range carrier communication connection.

5. The method of claim 1, further comprising:
sending, by the first device, an indication that a third device will perform a connection setup with the second device, to the second device via the out-of-band short-range carrier communication connection;
receiving, by the first device, connectivity settings from the second device via the out-of-band short-range carrier communication connection;
initiating, by the first device, a short-range carrier transport switch procedure with the third device by transmitting wireless communication signals providing a second out-of-band short-range carrier communication connection; and
sending, by the first device, in-band short-range carrier communication connection parameters including one or more parameters indicating a timer value of an interval related to the expected completion time of the transport switch procedure, and the connectivity settings of the second device, to the third device via the second out-of-band short-range carrier communication connection, to enable the third device to setup an in-band short-range carrier communication connection with the second device according to the in-band short-range carrier communication connection parameters, after the expected completion time.

6. The method of claim 5, further comprising:
generating, by the first device, additional security parameters on behalf of the third device;
sending, by the first device, the additional security parameters, to the second device via the out-of-band short-range carrier communication connection; and
sending, by the first device, the additional security parameters, to the third device via the second out-of-band short-range carrier communication connection, to enable the third device to authenticate itself to the second device in setting up the in-band short-range carrier communication connection with the second device.

7. A computer program comprising computer readable program code configured to cause performance of the method of any of the preceding claims when said program is run on a computer.

8. A computer program according to claim 7, wherein the computer program is a computer program product comprising a computer-readable medium bearing computer program code embodied therein for use with a computer.

9. An apparatus, comprising:
means for initiating a short-range carrier transport switch procedure with a second device by transmitting wireless out-of-band short-range carrier communication signals for providing an out-of-band short-range carrier communication connection; and
means for sending in-band short-range carrier communication connection parameters including one or more parameters indicating a timer value of an interval related to an expected completion time of the transport switch procedure, to the second device via the out-of-band short-range carrier communication connection, to enable the short-range carrier transport switch procedure to switch from the out-of-band short range carrier to the in-band short range carrier for communication between the devices.

10. The apparatus of claim 9, wherein the expected completion time of the transport switch procedure is a maximum time the second device may keep its radio on to enable accepting incoming connection requests.

11. The apparatus of claim 9, wherein the expected completion time of the transport switch procedure is a minimum time, after which the connection may be initiated by an initiator device.

12. The apparatus of claim 9, further comprising:
means for receiving from the second device, a response including one or more alternate parameters indicating an alternate timer value of the interval related to an expected completion time of a transport switch procedure, via the out-of-band short-range carrier communication connection.

13. The apparatus of claim 9, further comprising:
means for sending an indication that a third device will perform a connection setup with the second device, to the second device via the out-of-band short-range carrier communication connection;
means for receiving connectivity settings from the second device via the out-of-band short-range carrier communication connection;
means for initiating a short-range carrier transport switch procedure with the third device by transmitting wireless communication signals providing a second out-of-band short-range carrier communication connection; and
means for sending in-band short-range carrier communication connection parameters including one or more parameters indicating the timer value of the interval related to the expected completion time of the transport switch procedure, and the connectivity settings of the second device, to the third device via the second out-of-band short-range carrier communication connection, to enable the third device to setup an in-band short-range carrier communication connection with the second device according to the in-band short-range carrier communication connection parameters, after the expected completion time.

14. The apparatus of claim 13, further comprising:
means for generating additional security parameters on behalf of the third device;
means for sending the additional security parameters, to the second device via the out-of-band short-range carrier communication connection; and
means for sending the additional security parameters, to the third device via the second out-of-band short-range carrier communication connection, to enable the third device to authenticate itself to the second device in setting up the in-band short-range carrier communication connection with the second device.

15. The apparatus of claim 9, wherein an indication that a connection handover is to be conditional is included in a carrier power state field of an alternative carrier record in either an NFC handover request message or an NFC handover select message.

16. The apparatus of claim 15, wherein the connection handover condition is that the handover is to be delayed by a timer value.
